(19)

Europäisches Patentamt

European Patent Office

Office européen des brevets

(11) **EP 4 589 851 A1**

(12) **EUROPEAN PATENT APPLICATION**

(43) Date of publication:
**23.07.2025  Bulletin 2025/30**

(21) Application number: **24152222.6**

(22) Date of filing: **16.01.2024**

(51) International Patent Classification (IPC):
*H04B 1/04* (2006.01)     *H04L 27/36* (2006.01)

(52) Cooperative Patent Classification (CPC):
**H04B 1/04; H04L 27/364**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Rohde & Schwarz GmbH & Co. KG
81671 München (DE)**

(72) Inventor: **Nagel, Joerg
81671 München (DE)**

(74) Representative: **Prinz & Partner mbB
Patent- und Rechtsanwälte
Rundfunkplatz 2
80335 München (DE)**

(54) **METHOD OF CORRECTING ERRORS IN AN IQ SIGNAL GENERATOR SYSTEM**

(57)    A method of correcting errors in an IQ signal generator system (12) is described. The method comprises the steps of
- generating, by a baseband module (14), a baseband IQ signal having a baseband I signal part and a baseband Q signal part;
- modulating, by an IQ modulator module (16), the baseband IQ signal, thereby obtaining a modulated IQ signal;
- determining, by an analysis module (26), a level curve of the modulated IQ signal, wherein the level curve is associated with a signal level of the modulated IQ signal over time;

- determining, by the analysis module (26), at least one error quantity based on the level curve, wherein the level curve multiplied with a spectral factor is integrated in order to determine the at least one error quantity; and
- controlling, by a control module (30), the baseband module (14) and/or the IQ modulator module (16) in dependence of the at least one error quantity determined, thereby correcting the at least one error in the IQ signal generator system (12).

Further, an IQ signal generator system (12) is described.

**Fig. 1**

electronic device

baseband module

BB I

LO

BB Q

control module

analysis module

EP 4 589 851 A1

## Description

The present invention generally relates to a method of correcting errors in an IQ signal generator system. The present invention further relates to an IQ signal generator system.

IQ signal generator systems usually comprise a baseband module generating an in-phase (I) signal part and a quadrature (Q) signal part, and a modulation module that generates a modulated IQ signal based on the I signal part and the Q signal part.

In such IQ signal generator systems, different types of errors can occur that impair the signal quality of the modulated IQ signal. Conventional error suppression techniques rely on measurements that are performed by external measurement devices such as a spectrum analyzer. Based on the measurements, correction quantities are determined and the operational parameters of the IQ signal generator system are adapted accordingly.

Accordingly, the known error suppression techniques require additional measurement hardware, thereby increasing the effort and costs for correcting the errors.

Thus, the object of the present invention is to provide a method of correcting errors in an IQ signal generator system that is easier and more cost-efficient to perform.

According to the present invention, the problem is solved by a method of correcting errors in an IQ signal generator system. The IQ signal generator system comprises a baseband module, an IQ modulator module, an analysis module, and a control module. The method comprises the steps of

- generating, by the baseband module, a baseband IQ signal having a baseband I signal part and a baseband Q signal part;

- modulating, by the IQ modulator module, the baseband IQ signal, thereby obtaining a modulated IQ signal;

- determining, by the analysis module, a level curve of the modulated IQ signal, wherein the level curve is associated with a signal level of the modulated IQ signal over time;

- determining, by the analysis module, at least one error quantity based on the level curve, wherein the at least one error quantity is indicative of at least one error in the IQ signal generator system, wherein the level curve multiplied with a spectral factor is integrated in order to determine the at least one error quantity; and

- controlling, by the control module, the baseband module and/or the IQ modulator module in dependence of the at least one error quantity determined, thereby correcting the at least one error in the IQ signal generator system.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

Further, the term "level function" is understood to denote a discrete function or a continuous function that describes a quantity associated with the signal level of the modulated IQ signal, particularly over time or phase. For example, the level function may describe an amplitude of the modulated IQ signal or a power of the modulated IQ signal.

The method according to the present invention is based on the finding that the level function described above comprises information on errors occurring in the IQ signal generator system.

More precisely, as will be described in more detail below, the level function comprises information on I-offsets, Q-offsets, IQ gain imbalances, and IQ quadrature errors.

Accordingly, the at least one error quantity describing the at least one error can be determined based on the determined level function, and the at least one error can be corrected by the control module.

More precisely, the at least one error quantity can be determined by integrating the level function multiplied with the spectral factor over time or phase. It is noted that integrating over time and integrating over phase are equivalent options.

The method according to the present invention does not need external measurement devices in order to be performed. In fact, the analysis module and the control module may be integrated into the same electronic device comprising the IQ signal generator system. Thus, the effort and costs for correcting the errors described above are reduced.

The method according to the present invention may be performed partially or completely by software of the electronic device comprising the IQ signal generator system. Accordingly, the method according to the present invention may be a computer-implemented method.

According to an aspect of the present invention, the at least one error quantity is indicative of an I-offset, a Q-offset, an IQ gain imbalance, and/or an IQ quadrature error. Thus, the I-offset, the Q-offset, the IQ gain imbalance, and/or the IQ quadrature error may be corrected automatically by the control module based on the at least one error quantity determined.

Therein and in the following, the term "I-offset" is understood to denote the effect of a constant offset of the baseband I signal part onto the modulated IQ signal and/or cross-talk effects between a local oscillator signal applied to the I signal part and the modulated IQ signal due to imperfections in the IQ modulator module.

Likewise, the term "Q-offset" is understood to denote the effect of a constant offset of the baseband Q signal part onto the modulated IQ signal and/or cross-talk effects between a local oscillator signal applied to the Q signal part and the modulated IQ signal due to imperfections in the IQ modulator module.

The term "IQ gain imbalance" is understood to denote a gain imbalance between a signal path processing the baseband I signal part and a signal path processing the baseband Q signal part. These signal paths may each comprise amplifiers, attenuators, filters, etc., which may influence the gain applied to the baseband I signal part and the baseband Q signal part.

Further, the term "IQ quadrature error" is understood to denote a deviation from orthogonality of an I signal portion and a Q signal portion in the modulated IQ signal. For example, this may occur if the local oscillator signal used for modulation is applied to the baseband I signal part and the baseband Q signal part with a phase difference being different from 90°, i.e. with a phase difference that is not exactly 90°.

In an embodiment of the present disclosure, the level curve is an envelope of the modulated IQ signal. In the context of the present disclosure, the term "envelope" is understood to denote a function, particularly a smooth function, outlining the signal level of the modulated IQ signal. Particularly, the envelope of the modulated IQ signal may be equal to the instantaneous amplitude of the modulated IQ signal.

The analysis module may comprise an envelope detector, wherein the level curve is determined by the envelope detector. Such envelope detectors usually are provided in IQ signal generator systems anyway. Thus, no further hardware or other measurement equipment is necessary for determining the level function, thereby reducing the effort and costs for suppressing the unwanted signal portions.

Another aspect of the present invention provides that the baseband IQ signal is a single-tone signal. Thus, the method according to the present invention can be performed with a particularly simple test signal, namely the baseband IQ signal being a single-tone signal.

Particularly, the baseband module may be established as or comprise a single sideband generator. Accordingly, the modulated IQ signal may be a single sideband signal.

In a further embodiment of the present disclosure, the spectral factor depends on a frequency of the baseband IQ signal. In fact, the spectral factor may be $\sin(n \cdot \pi \cdot F \cdot t)$ or $\cos(n \cdot \pi \cdot F \cdot t)$, wherein n is an integer, F is the absolute value of the frequency of the baseband IQ signal, and t is time.

Particularly, n may be equal to 2 or 4.

According to another aspect of the present invention, the level curve multiplied with the spectral factor is integrated over one period of the baseband IQ signal or over a multiple of the period of the baseband IQ signal, particularly wherein the spectral factor is integrated over an integer multiple of the period of the baseband IQ signal. The period of the baseband signal is the inverse of the frequency of the baseband IQ signal. While integrating over one period of the baseband IQ signal is enough in order to determine the at least one error quantity, uncorrelated distortions in the level function can be suppressed by integrating over a multiple of the period, particularly over an integer multiple of the period.

A frequency of the baseband IQ signal may be smaller than a bandwidth of the analysis module, particularly smaller than half the bandwidth of the analysis module. Therein, the term "bandwidth of the analysis module" refers to the bandwidth processable by a component of the analysis module that determines the level function. Thus, it is ensured that the level function can be determined accurately.

For example, the analysis module may comprise an envelope detector that is configured to determine the level function. In this case, the frequency of the baseband IQ signal may be smaller than the bandwidth of the envelope detector, particularly smaller than half the bandwidth of the envelope detector.

In an embodiment of the present invention, an offset is added to the baseband I signal part and/or to the baseband Q signal part in order to correct the at least one error. By adding the offset to the baseband I signal part, an I-offset can be corrected. Likewise, by adding the offset to the baseband Q signal part, a Q-offset can be corrected.

Particularly, a gain applied to the baseband I signal part and/or a gain applied to the baseband Q signal part are/is adjusted in order to correct the at least one error. This way, an IQ gain imbalance between the baseband I signal part and the baseband Q signal part can be corrected.

A further aspect of the present invention provides that an adapted baseband I signal part is determined, wherein the adapted baseband I signal part is a linear combination of the baseband I signal part and the baseband Q signal part. Alternatively or additionally, an adapted baseband Q signal part is determined, wherein the adapted baseband Q signal part is a linear combination of the baseband I signal part and the baseband Q signal part. This way, an IQ quadrature error can be corrected. In other words, the IQ quadrature error is corrected by a predistortion of the baseband I signal part and/or of the baseband Q signal part.

In fact, the baseband module may comprise a suitable filter that is configured to determine the adapted baseband I signal part and/or the adapted Q signal part.

In a further embodiment of the present invention, a phase difference between a local oscillator signal being applied to the I signal part and the local oscillator signal being applied to the Q signal part is adapted in order to correct the at least one error. More precisely, the phase of the local oscillator signal applied to the baseband I signal part and/or to the baseband Q signal part may be adapted such that the phase difference is exactly 90°. This way, an IQ quadrature error can be corrected.

According to another aspect of the present invention, the control module automatically adapts operational parameters of the IQ signal generator system in order to correct the at least one error. Accordingly, the at least one error may be corrected fully automatically, i.e. without intervention of an operator.

In fact, the control module may automatically adapt operational parameters of the baseband module and/or of the IQ modulation module in order to correct the at least one error.

Another aspect of the present invention provides that a user input is received, and wherein the control module adapts operational parameters of the IQ signal generator system based on the received user input. Accordingly, the at least one error may be corrected based on the user input provided by an operator.

For example, the control module may determine adapted operational parameters that are suitable for correcting the at least one error, and the adapted operational parameters may be displayed on a display. The operator may confirm the adapted operational parameters or may further adjust the adapted operational parameters by means of the user input.

According to the present invention the problem further is solved by an IQ signal generator system. The IQ signal generator system comprises a baseband module, an IQ modulator module, an analysis module, and a control module. The IQ signal generator system is configured to perform the method described above.

Particularly, the IQ signal generator system is configured to perform the method according to any one of the variants described above.

Regarding the advantages and further properties of the IQ signal generator system, reference is made to the explanations given above with respect to the method, which also hold for the IQ signal generator system and vice versa.

The foregoing aspects and many of the attendant advantages of the claimed subject matter will become more readily appreciated as the same become better understood by reference to the following detailed description, when taken in conjunction with the accompanying drawings, wherein:

- Figure 1 schematically shows an electronic device with an IQ signal generator system according to the present invention;

- Figure 2 shows a flow chart of a method of correcting errors in an IQ signal generator system according to the present invention;

- Figure 3 shows plots of a modulated IQ signal without errors in the IQ signal generator system; and

- Figure 4 shows plots of a modulated IQ signal with errors being present in the IQ signal generator system.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

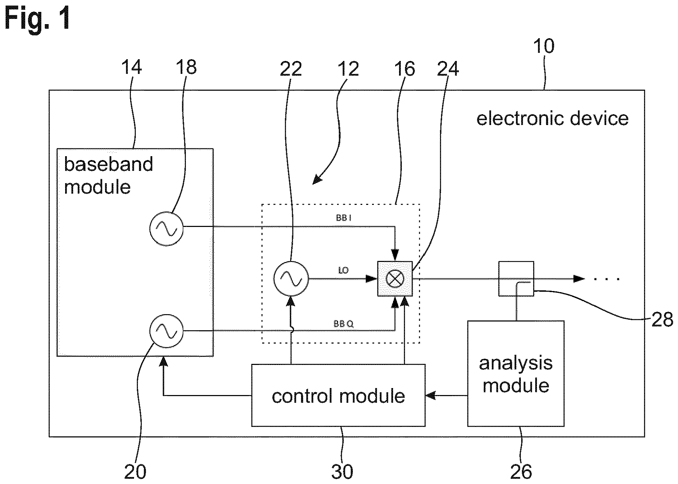

Figure 1 schematically shows an electronic device 10 comprising an IQ signal generator system 12.

For example, the electronic device 10 may be a signal generator being configured to generate a test signal for testing a device under test.

As another example, the electronic device 10 may be a test and/or measurement instrument for testing mobile network devices, broadcasting devices, RF transmitters, RF receivers, or other wireless communication devices.

As a further example, the electronic device 10 may be an RF transmitter, a wireless communication device, particularly a WLAN device, a TV transmitter, etc.

However, it is to be understood that the electronic device 10 may be any other type of device with built-in IQ signal generator.

The IQ signal generator system 12 comprises a baseband module 14 and an IQ modulator module 16.

In general, the baseband module 14 is configured to generate a baseband IQ signal having a baseband I signal part ("BB I" in Figure 1) and a baseband Q signal part ("BB Q" in Figure 1).

In fact, the baseband module 14 comprises a first signal generator unit 18, and a second signal generator unit 20.

The first signal generator unit 18 is configured to generate the baseband I signal part, while the second signal generator unit 20 is configured to generate the baseband Q signal part.

Particularly, the baseband module 14 or rather the signal generator units 18, 20 may establish a single sideband generator.

The baseband I signal part and the baseband Q signal part may have the same frequency F, such that baseband IQ signal is a single-tone signal.

The IQ modulator module 16 comprises a local oscillator 22 that is configured to generate a local oscillator (LO) signal having a certain frequency and phase, wherein the frequency and phase of the LO signal may be tunable.

The IQ modulator module 16 further comprises a mixer module 24 that is configured to receive the baseband I signal part, the baseband Q signal part, and the LO signal, and to generate a modulated IQ signal based on the LO signal and the baseband signal parts.

Therein, the baseband module 14 and the IQ modulator module 16 may be configured such that a travel time of the baseband I signal part to the mixer module 24 is equal to a travel time of the baseband Q signal part to the mixer module 24.

The modulated IQ signal may be provided to further components of the electronic device 10, as is indicated by the dots in Figure 1.

For example, the further components may comprise an RF frontend that is configured to up-convert the modulated IQ signal to an RF signal.

The electronic device 10 further comprises an analysis module 26 that is provided downstream of the IQ modulator module 16.

In the exemplary embodiment shown in Figure 1, the analysis module 26 is connected to the mixer module 24 by a directional coupler 28, such that the modulated IQ signal is forwarded to the analysis module 26 via the directional coupler 28.

However, it is to be understood that the analysis module 26 may be connected to the mixer module 24 by means of any other suitable type of connection.

The electronic device 10 further comprises a control module 30 that is connected to the analysis module 26 downstream of the analysis module 26.

The control module 30 is further connected to the baseband module 14, the local oscillator 22, and/or to the mixer module 24.

In fact, the control module 30 may be synchronized with the baseband module 14 and/or with the IQ modulator module 16, particularly with the local oscillator 22.

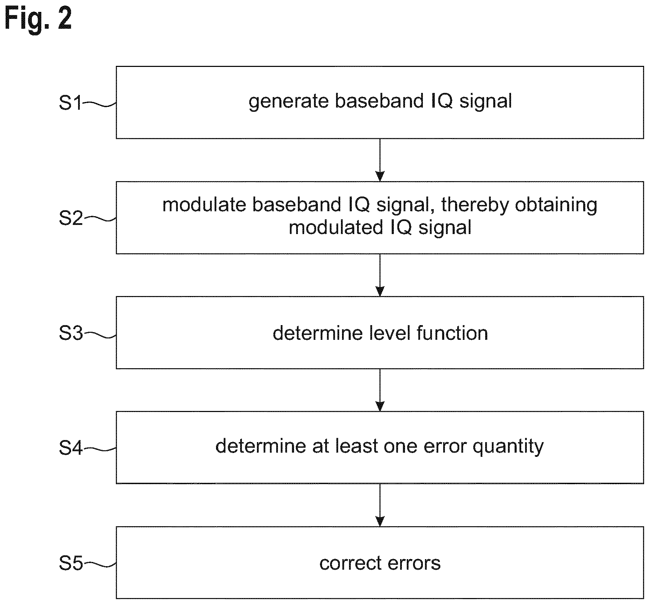

The electronic device 10 or rather the IQ signal generator system 12 is configured to perform a method of correcting errors in the IQ signal generator system 12 that is described hereinafter with reference to Figure 2 showing a schematic flow chart of the method.

The baseband IQ signal described above is generated by the baseband module 14 (step S1).

Without restriction of generality, the case of the baseband IQ signal being a single-tone signal is described hereinafter.

Accordingly, the baseband IQ signal is periodic with a period T=1/F.

Therein, the frequency F of the baseband IQ signal may be chosen such that the frequency F is smaller than a predetermined threshold.

For example, the analysis module 26 may comprise an envelope detector having a certain bandwidth. In this case, the predetermined threshold may be equal to the bandwidth of the envelope detector or equal to half the bandwidth of the envelope detector.

The baseband IQ signal is modulated by means of the IQ modulator module 16, thereby obtaining the modulated IQ signal (step S2).

The modulated IQ signal may be a single sideband signal.

The modulated IQ signal is forwarded to the analysis module 26, particularly via the directional coupler 28.

A level function describing a signal level of the modulated IQ signal over time is determined by the analysis module 26 (step S3).

In general, the level function may be a discrete function or a continuous function describing the signal level, particularly the amplitude and/or the power of the modulated IQ signal over time.

Particularly, the level function may be an envelope of the amplitude or power of the modulated IQ signal plotted against time.

In fact, the analysis module 26 may comprise an envelope detector that is configured to determine the envelope of the modulated IQ signal.

At least one error quantity is determined based on the determined level function, wherein the at least one error quantity is indicative of at least one error in the IQ signal generator system 12 (step S4).

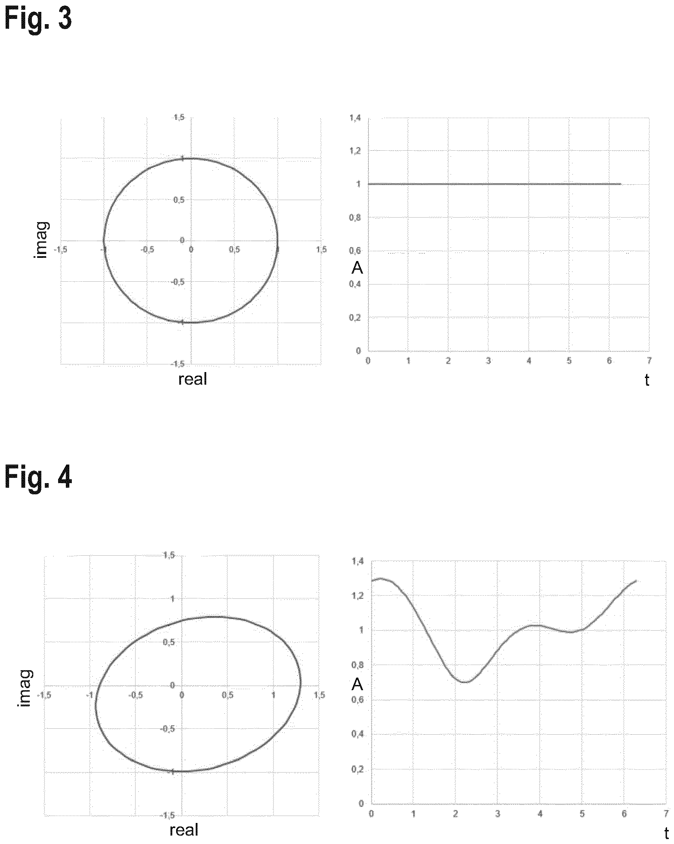

As is illustrated in Figures 3 and 4, the type and severity of the at least one error can be determined based on the determined level function.

The left diagram in Figure 3 shows a constellation diagram of the level function corresponding to the modulated IQ signal for the case of no error being present in the IQ signal generator system 12. As can be seen, the constellation diagram is substantially circular if no error is present.

The right diagram in Figure 3 shows the determined level function plotted against time. As can be seen, the determined level function is constant if no errors are present.

Figure 4 shows the constellation diagram as well as the level function for the case of an error being present.

Due to the error(s), the constellation diagram deviates from the circular form and is deformed elliptically. This deformation may be caused by an IQ gain imbalance and/or by an IQ quadrature error.

Moreover, a center of the constellation diagram of the level function is shifted away from the origin, i.e. from (I,Q)=(0,0). This shift may be caused by an I-offset and/or by a Q-offset.

Further, the determined level function is not constant but varies over time.

In a linear approximation, the I-offset, the Q-offset, the IQ gain imbalance and the IQ quadrature error are described by or rather proportional to the error quantities $E_{IQ,I}$, $E_{IQ,Q}$, $E_{IQ,g}$ and $E_{IQ,quad}$, respectively, which are given by

$$E_{IQ,I} = \int_0^{n \cdot T} A(t) \cos(2\pi \cdot F \cdot t)\, dt \,,$$

$$E_{IQ,Q} = \int_0^{n \cdot T} A(t) \sin(2\pi \cdot F \cdot t)\, dt \,,$$

$$E_{IQ,g} = \int_0^{n \cdot T} A(t) \cos(4\pi \cdot F \cdot t)\, dt \,,$$

$$E_{IQ,quad} = \int_0^{n \cdot T} A(t) \sin(4\pi \cdot F \cdot t)\, dt \,.$$

Therein, $n$ is a number equal to or greater than 1, $A(t)$ is the determined level function, and $T = 1/F$ is the period of the modulated IQ signal.

Particularly, $n$ is an integer equal to or greater than 1.

It is noted that these error quantities can be interpreted to be the real and imaginary parts of coefficients of a Fourier series of the level function $A(t)$, which is periodic with period $T$.

The at least one determined error quantity or rather the determined error quantities is/are forwarded to the control module 30.

The baseband module 14 and/or the IQ modulator module 16 are controlled by the control module 30 in dependence of the at least one error quantity determined, such that the at least one error corresponding to the at least one error quantity is corrected (step S5).

For example, if the at least one error comprises an IQ gain imbalance, a gain applied to the baseband I signal part and/or a gain applied to the baseband Q signal part may be adjusted in order to correct at least one error.

More precisely, at least one attenuator, at least one amplifier, and/or at least one filter comprised in the baseband module 14 and/or in the IQ modulator module 16 may be controlled to adjust the gain applied to the baseband I signal part and/or to the baseband Q signal part.

As another example, if the at least one error comprises an IQ quadrature error, the baseband I signal part and/or the baseband Q signal part may be adapted by an appropriate filter, particularly by a filter of the baseband module 14.

In fact, the filter may determine an adapted baseband I signal part $I'$, which corresponds to a linear combination of the baseband I signal part and the baseband Q signal part, i.e. $I' = a_1 I + b_1 Q$.

Further, the filter may determine an adapted baseband Q signal part $Q'$, which corresponds to a linear combination of the baseband I signal part and the baseband Q signal part, i.e. $Q' = a_2 I + b_2 Q$.

Therein, the filter coefficients $a_i$, $b_i$ are determined such that the IQ quadrature error is compensated.

Alternatively or additionally, the phases of the LO signal applied to the baseband I signal part and/or to the baseband Q signal part by the mixer module 24 may be adapted such that the phase difference is exactly 90°.

If the at least one error comprises an I-offset and/or a Q-offset, a constant offset may be added to the baseband I-signal and/or to the baseband Q-signal in order to account for the respective offset.

Summarizing, operational parameters of the signal generator system 12, particularly of the baseband module 14 and/or of the IQ modulator module 16, are adapted by the control module 30 in order to correct the at least one error.

The operational parameters may be adapted fully automatic, i.e. without further input of an operator being required.

However, it is also conceivable that the control module 30 may adapt the operational parameters based on user input. For example, an operator may confirm adapted operational parameters suggested by the control module 30 or may further adjust the adapted operational parameters suggested by the control module 30 by means of the user input.

The correction described above may be performed iteratively, such that the (absolute) value of the at least one error quantity decreases with each iteration. Alternatively, a single correction step may be applied.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A method of correcting errors in an IQ signal generator system (12), the IQ signal generator system (12) comprising a baseband module (14), an IQ modulator module (16), an analysis module (26), and a control module (30), wherein the method comprises the steps of

   - generating, by the baseband module (14), a baseband IQ signal having a baseband I signal part and a baseband Q signal part;
   - modulating, by the IQ modulator module (16), the baseband IQ signal, thereby obtaining a modulated IQ signal;
   - determining, by the analysis module (26), a level curve of the modulated IQ signal, wherein the level curve is associated with a signal level of the modulated IQ signal over time;
   - determining, by the analysis module (26), at least one error quantity based on the level curve, wherein the at least one error quantity is indicative of at least one error in the IQ signal generator system (12), wherein the level curve multiplied with a spectral factor is integrated in order to determine the at least one error quantity; and
   - controlling, by the control module (30), the baseband module (14) and/or the IQ modulator module (16) in dependence of the at least one error quantity determined, thereby correcting the at least one error in the IQ signal generator system (12).

2. The method of claim 1, wherein the at least one error quantity is indicative of an I-offset, a Q-offset, an IQ gain imbalance, and/or an IQ quadrature error.

3. The method according to any one of the preceding claims, wherein the level curve is an envelope of the modulated IQ signal.

4. The method according to claim 3, wherein the analysis module (26) comprises an envelope detector, and wherein the level curve is determined by the envelope detector.

5. The method according to any one of the preceding claims, wherein the baseband IQ signal is a single-tone signal.

6. The method according to any one of the preceding claims, wherein the spectral factor depends on a frequency of the baseband IQ signal.

7. The method according to any one of the preceding claims, wherein the level curve multiplied with the spectral factor is integrated over one period of the baseband IQ signal or over a multiple of the period of the baseband IQ signal, particularly wherein the spectral factor is integrated over an integer multiple of the period of the baseband IQ signal.

8. The method according to any one of the preceding claims, wherein a frequency of the baseband IQ signal is smaller than a bandwidth of the analysis module (26), particularly smaller than half the bandwidth of the analysis module (26).

9. The method according to any one of the preceding claims, wherein an offset is added to the baseband I signal part and/or to the baseband Q signal part in order to correct the at least one error.

10. The method according to any one of the preceding claims, wherein a gain applied to the baseband I signal part and/or a gain applied to the baseband Q signal part are/is adjusted in order to correct the at least one error.

11. The method according to any one of the preceding claims, wherein an adapted baseband I signal part is determined, wherein the adapted baseband I signal part is a linear combination of the baseband I signal part and the baseband Q signal part, and/or wherein an adapted baseband Q signal part is determined, wherein the adapted baseband Q signal part is a linear combination of the baseband I signal part and the baseband Q signal part.

12. The method according to any one of the preceding claims, wherein a phase difference between a local oscillator signal being applied to the I signal part and the local oscillator signal being applied to the Q signal part is adapted in order to correct the at least one error.

13. The method according to any one of the preceding claims, wherein the control module (30) automatically adapts operational parameters of the IQ signal generator system (12) in order to correct the at least one error.

**14.** The method according to any one of the preceding claims, wherein a user input is received, and wherein the control module (30) adapts operational parameters of the IQ signal generator system (12) based on the received user input.

**15.** An IQ signal generator system, the IQ signal generator system (12) comprising a baseband module (14), an IQ modulator module (16), an analysis module (26), and a control module (30), wherein the IQ signal generator system (12) is configured to perform the method according to any one of the preceding claims.

# Fig. 1

# Fig. 2

S1 — generate baseband IQ signal

S2 — modulate baseband IQ signal, thereby obtaining modulated IQ signal

S3 — determine level function

S4 — determine at least one error quantity

S5 — correct errors

Fig. 3

Fig. 4

**EUROPEAN SEARCH REPORT**

Application Number

EP 24 15 2222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 334 187 A (MOTOROLA LTD [GB]) 11 August 1999 (1999-08-11) * the whole document * | 1-15 | INV. H04B1/04 H04L27/36 |
| A | EP 0 503 588 A2 (NIPPON TELEGRAPH & TELEPHONE [JP]) 16 September 1992 (1992-09-16) * page 6 - page 10; figures 5-10 * | 1-15 | |
| A | US 2008/063113 A1 (GAO WEI [US] ET AL) 13 March 2008 (2008-03-13) * paragraph [0035] - paragraph [0068]; figures 2,3 * * paragraph [0120] - paragraph [0132]; figure 8 * | 1-15 | |
| A | WO 2017/109235 A1 (CENTRO DE ESTUDIOS E INVESTIG TECN [ES] ET AL.) 29 June 2017 (2017-06-29) * the whole document * | 1-15 | |
| | | | TECHNICAL FIELDS SEARCHED (IPC) H04B H04L |

The present search report has been drawn up for all claims

| Place of search | Date of completion of the search | Examiner |
|---|---|---|
| Munich | 10 June 2024 | Ayala Perriello, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 15 2222

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | | | Publication date | Patent family member(s) | | | Publication date |
|---|---|---|---|---|---|---|---|
| GB | 2334187 | A | 11-08-1999 | NONE | | | |
| EP | 0503588 | A2 | 16-09-1992 | DE | 69222452 | T2 | 26-02-1998 |
| | | | | EP | 0503588 | A2 | 16-09-1992 |
| | | | | US | 5293406 | A | 08-03-1994 |
| US | 2008063113 | A1 | 13-03-2008 | CN | 101119357 | A | 06-02-2008 |
| | | | | TW | 200814656 | A | 16-03-2008 |
| | | | | US | 2008063113 | A1 | 13-03-2008 |
| WO | 2017109235 | A1 | 29-06-2017 | NONE | | | |

EPO FORM P0459

For more details about this annex : see Official Journal of the European Patent Office, No. 12/82